# EUROPÄISCHE PATENTSCHRIFT

(11) **EP 0 936 391 B1**
(45) Veröffentlichungstag und Bekanntmachung des Hinweises auf die Patenterteilung: **22.09.2004**
(21) Anmeldenummer: 98810124.2
(22) Anmeldetag: 17.02.1998
(51) Int. Cl.: F16L 23/06, F16L 37/20, B65D 45/30

(54) **Verwendung eines Verbindungselements für Flansche an Behältermündungen von Laborgeräten**
Use of coupling for flanges of openings of containers for laboratory apparatuses
Usage d'un élément de connexion pour brides d'ouvertures de récipients d'appareils de laboratoire

(43) Veröffentlichungstag der Anmeldung: 18.08.1999
(73) Patentinhaber: Büchi Labortechnik AG, CH-9230 Flawil (CH)
(72) Erfinder: Sanwald, Marco, 9200 Gossau (CH); Widmer, Richard, 9200 Gossau (CH)
(74) Vertreter: Wenger, René

(56) Entgegenhaltungen:
- DE-B- 2 147 925
- US-A- 3 193 129
- US-A- 4 730 850

## Beschreibung

Die Erfindung betrifft die Verwendung eines Verbindungselements an Behältermündungen an Laborgeräten. Derartige Verbindungselemente müssen in der Lage sein, Flansche oder flanschähnliche Komponenten flüssigkeitsdicht und druckdicht zusammenzuhalten. Dabei müssen teilweise aber auch erhebliche Kräfte in Axialrichtung und in Umfangsrichtung aufgenommen werden.

Vor allem im Zusammenhang mit der Sicherung von Glasschliffverbindungen sind bereits zahlreiche Sicherungsklammern und ähnliche Verbindungselemente bekanntgeworden. So zeigt beispielsweise bereits das deutsche Gebrauchsmuster 19 65 991 eine Sicherungsklammer für Schliffverbindungen bestehend aus zwei Segmenten, welche die Schliffverbindung zangenartig umgreifen. Als Spannvorrichtung dient eine Spannschraube, mit welcher die Klammer in Schliessrichtung zusammengepresst werden kann.

Ein Nachteil der bekannten Verbindungselemente besteht darin, dass die Handhabung schwierig ist und eine Bedienungsperson stets beide Hände benötigt, um das Verbindungselement zu schliessen. Dieser Umstand bildet gerade im Laborbereich ein erhebliches Gefahrenpotential, weil teilweise auch noch schwere Glasgefässe oder solche mit gesundheitsschädlichen Stoffen festgehalten werden müssen. Die bekannten Elemente bewirken ausserdem eine relativ ungünstige Kraftverteilung in Umfangsrichtung. Es ist daher eine Aufgabe der Erfindung, ein Verbindungselement der Eingangs genannten Art zu schaffen, mit dem eine sichere Verbindung hergestellt werden kann, das leicht und einfach zu bedienen ist und mit dem eine möglichst optimale Kraftverteilung in Umfangsrichtung erzielbar ist.

Diese Aufgabe wird erfindungsgemäss mit einem Verbindungselement gelöst, das die Merkmale im Anspruch 1 aufweist.

Der Schnellspannverschluss für das Zusammenziehen der gelenkig miteinander verbundenen Spannsegmente ermöglicht eine einhändige Bedienung. Die gewünschte Spannkraft in Umfangsrichtung kann stets gleichbleibend den Gegebenheiten angepasst werden. Besonders vorteilhaft weist der Schnellspannverschluss einen mit einem Exzenterspannhebel versehenen Verschlusshaken auf. Damit wird auch eine optimale Krafteinleitung in Umfangsrichtung ermöglicht.

Obwohl bei kleinen Flanschdurchmessern bereits zwei gelenkig miteinander verbundene Spannsegmente genügen würden, werden im Hinblick auf die Verteilung der Kräfte wesentlich bessere Ergebnisse erzielt, wenn das Verbindungselement wenigstens drei Spannsegmente aufweist. Bei grösseren Flanschdurchmessern können unter Umständen auch mehr als drei Spannsegmente eingesetzt werden, so dass das Verbindungselement eine Art Gliederkette bildet.

Die Spannsegmente sind vorteilhaft mittels Gelenkgliedern miteinander verbunden. In bestimmten Fällen wäre aber auch die unmittelbare Verbindung der einzelnen Spannsegmente denkbar.

Weitere Vorteile im Hinblick auf die leichte Bedienbarkeit können erreicht werden, wenn eines der Spannsegmente ein Befestigungselement für die Befestigung an einem der zu verbindenden Flansche aufweist. Das Verbindungselement verbleibt somit stets an einem der beiden Flansche und muss zum Schliessen nicht separat festgehalten werden. Der Schliessvorgang wird ausserdem noch erleichtert, wenn wenigstens eines der Spannsegmente ein Rastelement für die Einrastung an einem der zu verbindenden Flansche aufweist. Die Spannsegmente können auf diese Weise lose eingerastet werden, bevor der Schnellspannverschluss betätigt wird.

Die Spannsegmente können einstückig aus Kunststoffmaterial gefertigt sein. Derartige Segmente lassen sich preiswert herstellen. Für die Aufnahme grösserer Kräfte kann es zweckmässig sein, die Spannsegmente aus Metall herzustellen, wobei zur Vermeidung von Beschädigungen auf der Innenseite der Spannsegmente eine Beschichtung oder eine Einlage aus Kunststoff vorgesehen sein kann.

Bei Rotationsverdampfern ist eine leichte Handhabung der Kolbenhalsverbindung besonders wichtig, weil mit einer Hand immer der Verdampferkolben über dem Heizbad festgehalten werden muss. Ausserdem unterliegt die Verbindung besonderen kräftemässigen Anforderungen, da sich das Verbindungselement auch noch um die eigene Achse dreht.

Weitere Vorteile und Einzelmerkmale der Erfindung ergeben sich aus der nachfolgenden Beschreibung eines Ausführungsbeispiels und aus den Zeichnungen. Es zeigen:
- Fig. 1: eine Draufsicht in Axialrichtung auf ein an eine Flanschverbindung angelegtes Verbindungselement im geöffneten Zustand,
- Fig. 2: ein Querschnitt durch die Ebene A-A gemäss Fig. 1,
- Fig. 3: das Verbindungselement gemäss Fig. 2 im geschlossenen Zustand,
- Fig. 4: eine Draufsicht auf das Verbindungselement gemäss Fig. 3 in Pfeilrichtung B,
- Fig. 5: eine Draufsicht auf das Verbindungselement gemäss Fig. 3 in Pfeilrichtung C, und
- Fig. 6: eine perspektivische Prinzipdarstellung eines Rotationsverdampfers.

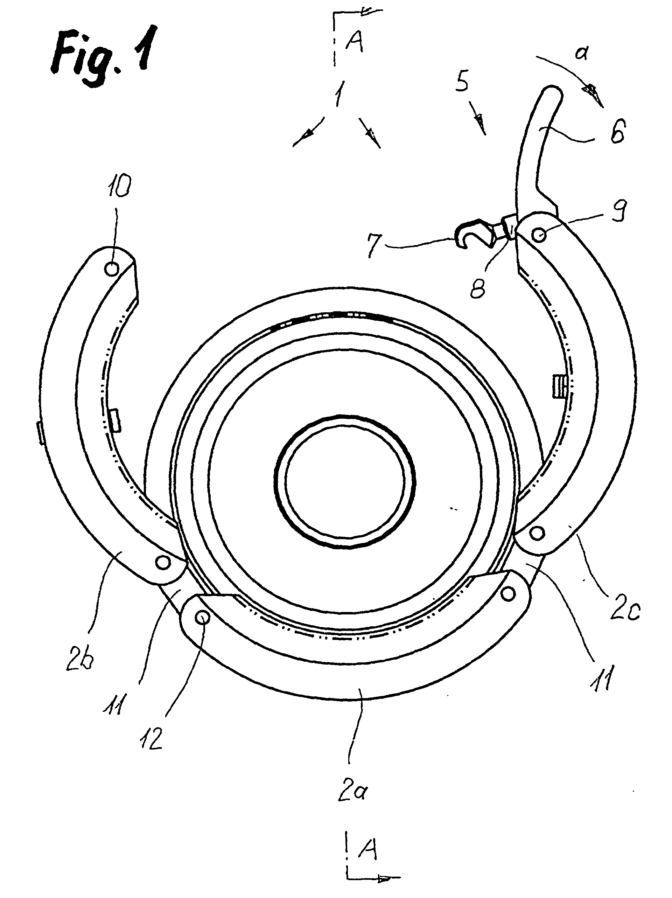

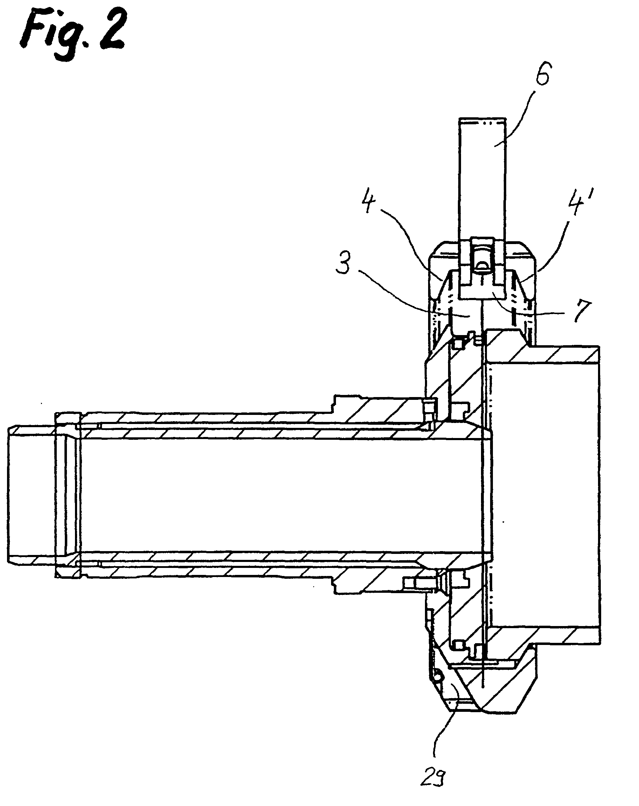

Wie in den Figuren 1 und 2 dargestellt, besteht ein insgesamt mit 1 bezeichnetes Verbindungselement im Wesentlichen aus den drei kreisbogenförmigen Spannsegmenten 2a, 2b und 2c. Diese Segmente sind auf der Innenseite mit einer eine Hohlkehle bildenden Ausnehmung 3 versehen, welche schräge Seitenwände 4, 4' aufweist. Die Spannsegmente sind ausserdem mittels Gelenkgliedern 11 miteinander verbunden, welche um Drehgelenke 12 schwenkbar sind. Die Drehgelenke werden dabei durch einen Stift gebildet, welcher die Spannsegmente und die Gelenkglieder durchdringt.

Zum Schliessen des Verbindungselements 1 ist ein Schnellspannverschluss 5 vorgesehen. Dieser besteht aus einem Exzenterspannhebel 6, der um ein Spannhebelgelenk 9 schwenkbar ist. Im Abstand zum Spannhebelgelenk 9 ist am Exzenterspannhebel ein Spannhaken 7 gelenkig befestigt, der an einem Spannhakenstift 10 am Spannsegment 2b einhängbar ist. Um die Schliesskraft optimal einstellen zu können, ist der Spannhaken 7 in eine Gewindebüchse 8 eingeschraubt, so dass je nach Einschraubtiefe der Spannhaken kürzer oder weiter greift. Ein Schwenken des Exzenterspannhebels 6 in Pfeilrichtung a bei eingehängtem Spannhaken 7 bewirkt auf bekannte Weise eine Zunahme der Spannkraft, wobei diese nach Ueberwindung des Totpunkts am Exzenter den Exzenterspannhebel in der Schliesstellung festhält.

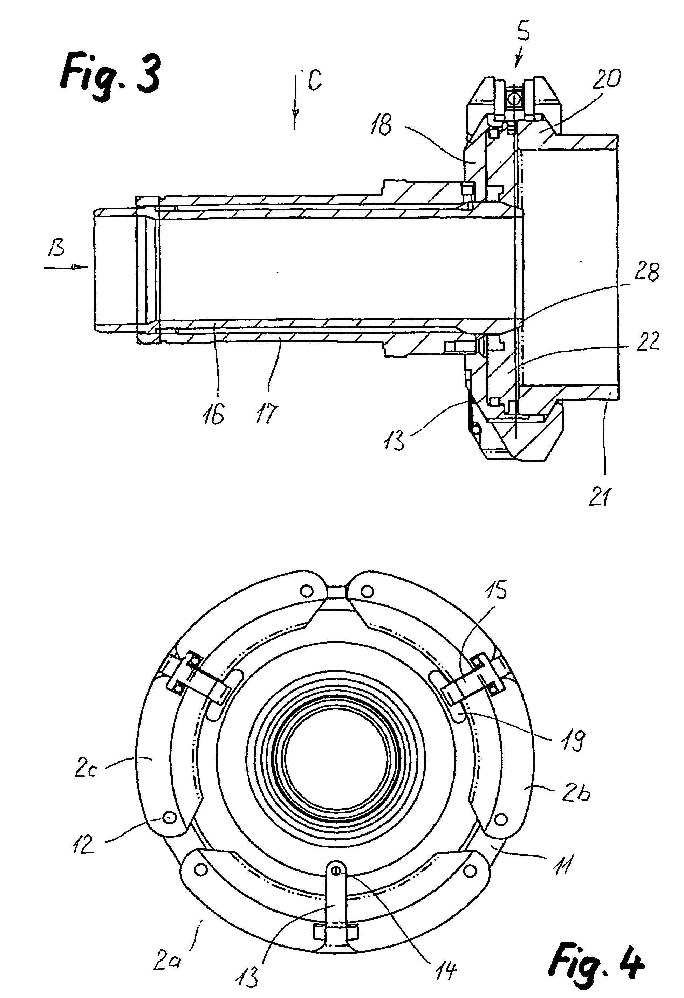

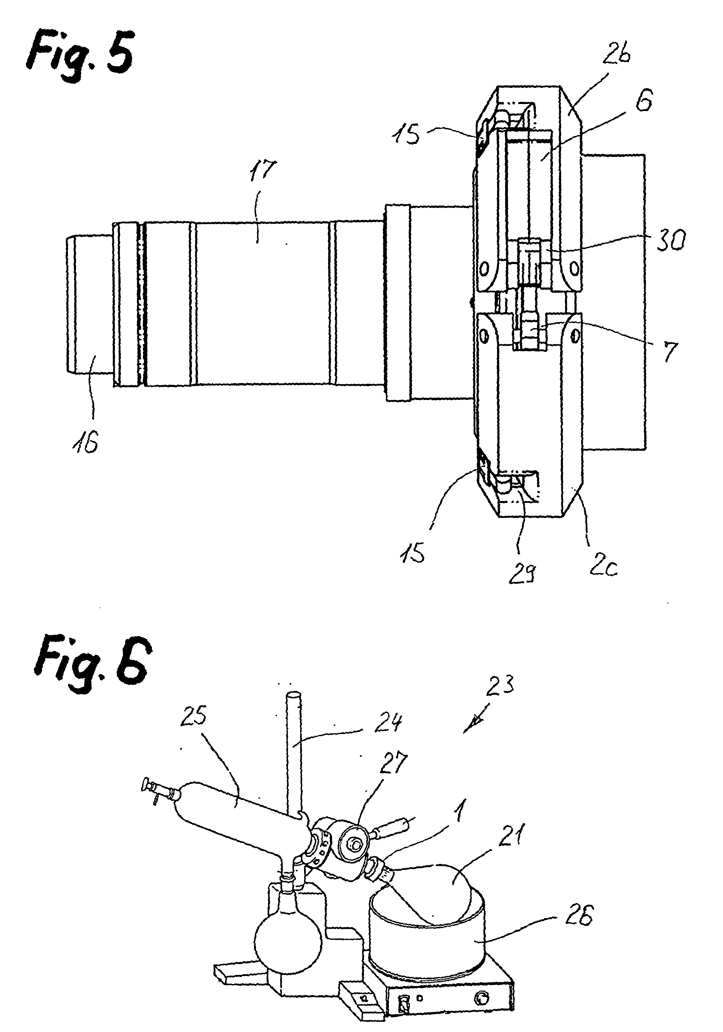

Der Schliesszustand des Verbindungselements ist aus den Figuren 3 und 4 ersichtlich. Das in den Figuren 1 bis 5 dargestellte Ausführungsbeispiel zeigt den Einsatz eines Verbindungselements für die Herstellung einer Kolbenhalsverbindung an einem Rotationsverdampfer. Dabei wird ein Verdampferkolben 21 mit seinem Flansch 20 gasdicht mit einem Dampfdurchführungsrohr 16 verbunden. Letzteres besitzt jedoch selber keinen Flansch, sondern ist in einer Antriebshülse 17 aus Metall gelagert, an deren Stirnseite ein Flansch 18 befestigt ist. An der Antriebshülse 17 wird die gesamte Einheit um die Längsmittelachse in Drehung versetzt.

Die geschlossenen Spannsegmente pressen mit ihren Schrägflächen 4, 4' die beiden ebenfalls angeschrägten Flansche 18 und 20 gegeneinander. Die Abdichtung gegenüber dem Dampfdurchführungsrohr 16 erfolgt mit Hilfe einer Dichtscheibe 22, welche zwischen den beiden Flanschen 18 und 20 liegt und welche gleichzeitig an der Mündung 28 des Dampfdurchführungsrohrs 16 anliegt.

Das ganze Verbindungselement 1 ist stets fest mit dem Flansch 18 verbunden. Zu diesem Zweck weist das Spannsegment 2a eine Befestigungslasche 13 auf, welche den Flansch 18 etwas überlappt und welche mittels einer Befestigungsschraube 14 mit diesem verschraubt ist. Auch bei gelöstem Verbindungselement und entferntem Verdampferkolben 21 wird somit das Spannsegment 2a immer in der dargestellten Position festgehalten, wobei dann die beiden übrigen Spannsegmente 2b und 2c lose an den Gelenkgliedern 11 hängen.

Zur Vereinfachung des Schliessvorgangs sind die Spannsegmente 2b und 2c mit je einem federnden Rastbügel 15 versehen. Diese Rastbügel sind in Schliesstellung vorgespannt und greifen im eingerasteten Zustand in je eine zugeordnete Vertiefung 19 am Flansch 18. Auf diese Weise können sie nach dem Ansetzen des Verdampferkolbens 21 eingerastet werden, so dass sie bereits ihre Schliessposition einnehmen. Dies kann mit einer Hand erfolgen, während mit der anderen Hand der Verdampferkolben 21 festgehalten wird. Anschliessend muss lediglich noch die Spannvorrichtung 5 geschlossen werden, was ersichtlicherweise ebenfalls einhändig möglich ist.

Fig. 5 zeigt nochmals die geschlossene Kolbenhalsverbindung aus einem anderen Blickwinkel. Erkennbar ist hier auch die Anordnung der Rastbügel 15 in je einem Schlitz 29. Auch die Befestigungslasche 13 ist in einem derartigen Schlitz gelagert. Auch für den Exzenterspannhebel ist eine Vertiefung 30 vorgesehen, so dass er im Schliesszustand nicht störend in Erscheinung tritt.

Fig. 6 zeigt den Aufbau eines an sich bekannten Rotationsverdampfers 23 mit einem Stativ 24 und Heizbad 26. Am Stativ ist eine Antriebsvorrichtung 27 und ein Kühler 25 befestigt. Der Verdampferkolben 21 ist mittels des Verbindungselementes 1 drehbeweglich im Heizbad 26 gehalten.

## Patentansprüche

1. Verwendung einer Verbindung als Kolbenhalsverbindung zum Verbinden eines drehbar gelagerten Dampfdurchführungsrohrs (16) eines Rotationsverdampfers mit einem ersten Flansch (18) mit einem Verdampferkolben (21) des Rotationsverdampfers mit einem zweiten Flansch (20), wobei die Verbindung mit einem Verbindungselement mit gelenkig miteinander verbundenen Spannsegmenten (2a, 2b, 2c) und mit einer Spannvorrichtung (5) zum Spannen der Spannsegmente um die Flansche (18, 20) versehen ist,
welche Spannsegmente manschettenartig um die zu verbindenden Flansche (18, 20) legbar sind,
und auf ihrer Innenseite Aufnahmemittel (3, 4, 4') für die gemeinsame Aufnahme von Flanschen (18, 20) aufweisen und
wobei die Spannvorrichtung (5) ein Schnellspannverschluss ist.

2. Verwendung einer Verbindung nach Anspruch 1, **dadurch gekennzeichnet, dass** der Schnellspannverschluss einen mit einem Exzenterspannhebel (6) versehenen Verschlusshaken (7) aufweist.

3. Verwendung einer Verbindung nach Anspruch 1 oder 2, **dadurch gekennzeichnet, dass** wenigstens drei Spannsegmente (2a, 2b, 2c) miteinander verbunden sind.

4. Verwendung einer Verbindung nach einem der Ansprüche 1 bis 3, **dadurch gekennzeichnet, dass** die Spannsegmente mittels Gelenkgliedern (11) miteinander verbunden sind.

5. Verwendung einer Verbindung nach einem der Ansprüche 1 bis 4, **dadurch gekennzeichnet, dass** eines der Spannsegmente (2a) ein Befestigungselement (13) für die Befestigung an einem der zu verbindenden Flansche (18) aufweist.

6. Verwendung einer Verbindung nach einem der Ansprüche 1 bis 5, **dadurch gekennzeichnet, dass** wenigstens eines der Spannsegmente (2b, 2c) ein Rastelement (15) für die Einrastung an einem der zu verbindenden Flansche (18) aufweist.

7. Verwendung einer Verbindung nach einem der Ansprüche 1 bis 6, **dadurch gekennzeichnet, dass** die Spannsegmente aus Metall und/oder Kunststoff gefertigt sind.

8. Verwendung einer Verbindung nach einem der Ansprüche 1 bis 7 , **dadurch gekennzeichnet, dass** das Dampfdurchführungsrohr (16) in einer Antriebshülse (17) gehalten ist, welche mit einem Flansch (18) versehen ist, dass das Verbindungselement (1) um den Flansch (18) der Antriebshülse und den Flansch (20) des Verdampferkolbens (21) gelegt ist und dass zwischen den beiden Flanschen eine Dichtscheibe (22) angeordnet ist, welche dichtend an der Mündung (28) des Dampfdurchführungsrohrs anliegt.

## Claims

1. Use of a connection as a flask neck connection for connecting a rotatably mounted vapour ducting tube (16) of a rotational evaporator having a first flange (18) to an evaporator flask (21) of the rotational evaporator having a second flange (20), wherein the connection is provided with a connecting element with pivotably interconnected clamping segments (2a, 2b, 2c) and a clamping device (5) for clamping the clamping segments around the flanges (18, 20),
which clamping segments can be fitted collar-like around the flanges (18, 20) to be connected
and on their inside have receiving means (3, 4, 4') for jointly receiving flanges (18, 20) and
wherein the clamping device (5) is a quick-action clamping fastener.

2. Use of a connection according to claim 1 **characterised in that** the quick-action clamping fastener has a fastener hook (7) provided with an eccentric clamping lever (6).

3. Use of a connection according to claim 1 or claim 2 **characterised in that** at least three clamping segments (2a, 2b, 2c) are connected together.

4. Use of a connection according to one of claims 1 to 3 **characterised in that** the clamping segments are connected together by means of link members (11).

5. Use of a connection according to one of claims 1 to 4 **characterised in that** one of the clamping segments (2a) has a fixing element (13) for fixing to one of the flanges (18) to be connected

6. Use of a connection according to one of claims 1 to 5 **characterised in that** at least one of the clamping segments (2b, 2c) has a retaining element (15) for latching engagement on one of the flanges (18) to be connected.

7. Use of a connection according to one of claims 1 to 6 **characterised in that** the clamping segments are made from metal and/or plastic material.

8. Use of a connection according to one of claims 1 to 7 **characterised in that** the vapour ducting tube (16) is held in a drive sleeve (17) provided with a flange (18), that the connecting element (1) is fitted around the flange (18) of the drive sleeve and the flange (20) of the evaporator flask (21) and that arranged between the two flanges is a sealing disc (22) which bears sealingly against the opening (28) of the vapour ducting tube.

## Revendications

1. Utilisation d'une liaison comme liaison de col de ballon pour relier un tube de passage de vapeur (16), monté en rotation, d'un évaporateur rotatif pourvu d'une première bride (18) à un ballon (21) dudit évaporateur rotatif pourvu d'une seconde bride (20), la liaison étant pourvue d'un élément de liaison avec des segments de serrage (2a, 2b, 2c) reliés entre eux de manière articulée et avec un dispositif de serrage (5) pour serrer les segments de serrage autour des brides (18, 20),
les segments de serrage étant aptes à être posés à la manière de manchons autour des brides (18, 20) à relier
et présentant sur leur face intérieure des moyens de réception (3, 4, 4') pour recevoir conjointement les brides (18, 20),
le dispositif de serrage (5) étant constitué par une fermeture rapide par serrage.

2. Utilisation d'une liaison selon la revendication 1, **caractérisée en ce que** la fermeture rapide par serrage comporte un crochet de fermeture (7) pourvu d'un levier de serrage à excentrique (6).

3. Utilisation d'une liaison selon la revendication 1 ou 2, **caractérisée en ce qu'**au moins trois segments de serrage (2a, 2b, 2c) sont reliés entre eux.

4. Utilisation d'une liaison selon l'une des revendications 1 à 3, **caractérisée en ce que** les segments de serrage sont reliés entre eux à l'aide d'organes d'articulation (11).

5. Utilisation d'une liaison selon l'une des revendications 1 à 4, **caractérisée en ce que** l'un des segments de serrage (2a) comporte un élément de fixation (13) pour la fixation à l'une des brides (18) à relier.

6. Utilisation d'une liaison selon l'une des revendications 1 à 5, **caractérisée en ce que** l'un au moins des segments de serrage (2b, 2c) comporte un élément d'encliquetage (15) pour s'enclencher sur l'une des brides (18) à relier.

7. Utilisation d'une liaison selon l'une des revendications 1 à 6, **caractérisée en ce que** les segments de serrage sont fabriqués en métal et/ou en matière plastique.

8. Utilisation d'une liaison selon l'une des revendications 1 à 7, **caractérisée en ce que** le tube de passage de vapeur (16) est maintenu dans un manchon d'entraînement (17) qui est pourvu d'une bride (18), **en ce que** l'élément de liaison (1) est placé autour de la bride (18) du manchon d'entraînement et autour de la bride (20) du ballon d'évaporateur (21), et **en ce qu'**il est prévu entre les deux brides une rondelle d'étanchéité (22) qui est appliquée de manière étanche contre l'ouverture (28) du tube de passage de vapeur.
